**Europäisches Patentamt**

**European Patent Office**

**Office européen des brevets**

(19)

(11) **EP 1 569 458 A1**

(12) **EUROPEAN PATENT APPLICATION**

| | |
|---|---|
| (43) Date of publication:<br>**31.08.2005 Bulletin 2005/35** | (51) Int Cl.⁷: **H04N 7/30**, H04N 7/50 |

(21) Application number: **04003184.1**

(22) Date of filing: **12.02.2004**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | • **Wittmann, Steffen**<br>**63263 Neu-Isenburg (DE)**<br>• **Schlockermann, Martin**<br>**63322 Roedermark (DE)** |
| (71) Applicant: **MATSUSHITA ELECTRIC INDUSTRIAL**<br>**CO., LTD.**<br>**Osaka 571-8501 (JP)** | (74) Representative: **Grünecker, Kinkeldey,**<br>**Stockmair & Schwanhäusser Anwaltssozietät**<br>**Maximilianstrasse 58**<br>**80538 München (DE)** |
| (72) Inventors:<br>• **Wedi, Thomas**<br>**64823 Gross-Umstadt (DE)** | Remarks:<br>Amended claims in accordance with Rule 86 (2)<br>EPC. |

(54) **Encoding and decoding of video images based on a non-linear quantization**

(57) The present invention enables to adaptively shape the quantization intervals according to a non-linear quantization curve for encoding video data in order to better adapt the quantization process to film grain information without increasing the resulting bit rate while maintaining the coding efficiency.

Fig. 7

EP 1 569 458 A1

**Description**

The present invention relates to the encoding and decoding of motion picture video data. Particularly, the present invention relates to a method and an apparatus for encoding and decoding video data, including film grain information, by employing an adapted quantization.

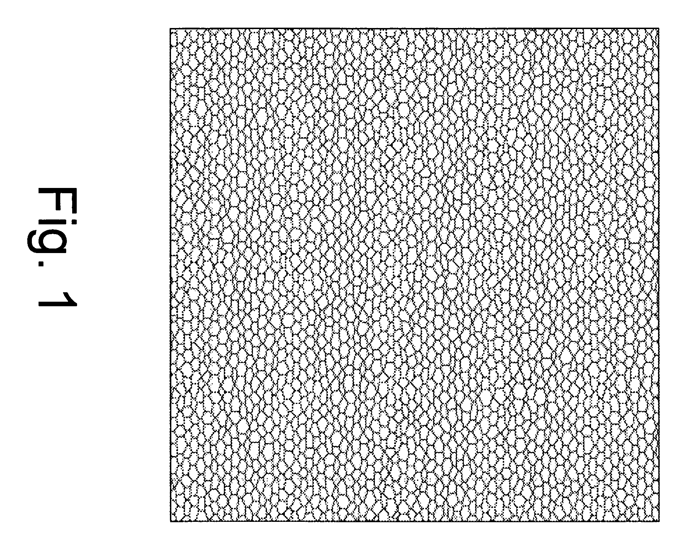

A motion picture film consists of silver-halide crystals, which are dispersed within a photographic emulsion of the film. Each image recorded on the photographic film is generated by exposing and developing the silver-halide crystals. In color images, the silver is chemically removed after the development. However, the silver crystal structure remains after development in the form of tiny grains of dye. Due to the random form of silver crystals in the emulsion, the grains are randomly formed and distributed within the image. An illustrative example of a grain structure is shown in Fig. 1. A perceivable grain structure is called film grain.

A viewer watching a motion picture reproduction does not recognize the individual grains which have a size of about 0.002 mm down to above one-tenth of that size. However, the viewer will perceive groups of grains and identify same as film grain.

For enhancing the resolution of the images, the perception of film grain is likewise increased. Specifically, film grain is clearly noticeable in cinema reproductions and in high-definition video images. On the other hand, film grain is of less importance for standard television images and for even smaller television display formats.

Motion pictures are being adopted in increasing numbers of applications, ranging from video-telephoning and video-conferencing to DVD and digital television. When a motion picture is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standards are currently the standards denoted as H.264 /AVC or MPEG-4 / AVC.

The encoding approach underlying most of these standards consists of the following main stages:

(a) Dividing each individual frame into blocks of pixels in order to subject each video frame to data compression at a block level.

(b) Reducing spatial redundancies within a video frame by applying each block of video data to a transform from the spatial domain into the frequency domain.

(c) Quantizing the resulting transform coefficients.

(d) Entropy encoding the quantized transform coefficients.

(e) Exploiting temporal dependencies between blocks of subsequent frames in order to only transmit changes between subsequent frames. This is accomplished by employing a motion estimation/compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

Although current video coding standards employ a plurality of different procedural steps to cope with different video contents, these standards do not take film grain into account. Consequently, these standards do not encode film grain information. Film grain information can only be maintained when reducing the coding efficiency considerably.

Accordingly, the present invention aims to provide an improved method and apparatus for encoding and decoding video data, including film grain information, by maintaining a high encoding efficiency.

This is achieved by the subject matter of the independent claims.

Preferred embodiments are the subject matter of dependent claims.

According to a first aspect of the present invention, a method for encoding video data is provided. The method comprises the steps of dividing an image into blocks, wherein each block includes a plurality of pixels, transforming the pixels of a block into transform coefficients and quantizing the coefficients in accordance with predefined quantization intervals by mapping each coefficient value to a quantized coefficient value. The quantization intervals are set in accordance with a predefined quantization curve. The quantization curve is a non-linear curve having smaller quantization intervals for lower coefficient values.

According to a further aspect of the present invention, an encoding apparatus for encoding video data based on image blocks is provided. Each image block includes a plurality of pixels. The encoder comprises a transform unit and a quantizer. The transform unit transforms the pixels of a block into transform coefficients. The quantizer quantizes the transform coefficients in accordance with pre-defined quantization intervals by mapping each coefficient value to quantized a coefficient value. The quantization intervals are set in accordance with a predefined quantization curve. The quantization curve is a non-linear curve having smaller quantization intervals for lower coefficient values.

According to another aspect of the present invention, a method for decoding video data on a block basis is provided. The encoded video data include quantized coefficients. The method comprises the steps of de-quantizing quantized coefficients of said encoded video data by mapping each quantized coefficient value to a de-quantized coefficient value in accordance with pre-defined quantization intervals, and transforming a block of de-quantized coefficients into a block of pixels. The quantization intervals are set in accordance with a pre-defined quantization curve. The quantization curve is a non-linear curve having smaller quantization intervals for lower coefficient values.

According to still another aspect of the present invention, a decoding apparatus for decoding encoded video data on a block basis is provided. The encoded video data include quantized coefficients. The decoder comprises an inverse quantizer and an inverse transform unit. The inverse quantizer de-quantizes a block of quantized coefficients of said encoded video data by mapping each quantized coefficient value to a de-quantized coefficient value in accordance with pre-defined quantization intervals. The inverse transform unit transforms a block of de-quantized coefficients into a block of pixels. The quantization intervals are set in accordance with a predefined quantization curve. The quantization curve is a non-linear curve having smaller quantization intervals for lower coefficient values.

The use of a non-linear quantization curve in accordance with the present invention enables an accurate adaptation of the quantization intervals, i.e. to enable an accurate adjustment of the intended loss of coefficient accuracy, to the film grain information. By having smaller quantization intervals for lower coefficient values, the film grain information can be maintained without increasing the coding bit rate, i.e. decreasing the coding efficiency.

A non-linear quantization for video coding is already known from US-B-6 347 116 and US-B-6 654 418, wherein a quantization matrix is applied to the coding coefficients. This known quantization non-linearity does not depend on the coefficient value, but on the position of the individual transform coefficients within the coefficient matrix. In contrast, the present invention employs a non-linear quantization which depends on the size of the coefficient value. Further, it is not known to apply a non-linear characteristic curve during the quantization process.

Preferably, the quantization intervals of the pre-defined quantization curve have a step size which increases for larger coefficient values. Such a quantization curve enables the maintenance of coding efficiency by shifting a data amount spent to coefficient accuracy during quantization from larger to smaller coefficient values.

According to a preferred embodiment, the quantization intervals change in accordance with particular curve characteristic, such as a piecewise linear curve, a root curve, or a logarithmic curve.

Preferably, the quantization curve is defined by parameters and these parameters are included in the encoded video data. Accordingly, the quantization curve needs not to be fixed and does not need to be applied irrespective of the kind of video data to be encoded, but can be adapted during the quantization process, for instance depending on the image content, the presence of film grain, etc. Further, the identical curve can be employed during encoding and decoding by including the parameters defining the curve within the encoded data.

According to a preferred embodiment, the quantization step comprise the steps of weighting the coefficient values in accordance with the pre-defined quantization curve and of quantizing the weighted coefficient values by applying fixed quantization intervals. By weighting the coefficient values in accordance with the quantization curve depending on the size of the coefficient value, an existing quantization process having fixed quantization intervals can be maintained as the coefficient values are converted in accordance with the curve characteristic before the quantization is performed. Hence, existing encoding and decoding devices may be enhanced in a simple manner by only inserting additional steps for a pre-processing of the transform coefficient values and, at the decoder side, by post-processing of the de-quantized coefficients.

According to a further preferred embodiment, the quantization curve is selected depending on the detection of a degree or of the presence of film grain within the video data to be encoded. Such an adaptive approach allows to always select the appropriate quantization curve, depending on the currently encoded image content. Alternatively, the detection process may only relate to the presence of film grain within the video data to be encoded.

The above and other objects and features of the present invention will become more apparent from the following description and preferred embodiments given in conjunction with the accompanying drawings, in which:

Fig. 1    illustrates an enlarged example of a film grain structure;

Fig. 2     schematically illustrates in block diagram form the configuration of a conventional hybrid video encoder;

Fig. 3     schematically illustrates in block diagram form the configuration of a conventional hybrid video decoder;

Fig. 4     illustrates an example for a relation between an input coefficient value W and a quantized output coefficient value W' for a uniform quantizer having a step size of $\Delta$ and a rounding control value of f = $\Delta$/2;

Fig. 5     illustrates an example for a relation between an input coefficient value W and a quantized output coefficient value W' for a quantizer having a step size of $\Delta$ and a rounding control value f = 0;

Fig. 6     schematically illustrates a Laplacian probability distribution;

Fig. 7     illustrates an example of a relation between an input coefficient value W and a quantized output coefficient value W' of a non-uniform quantizer in accordance with the present invention;

Fig. 8     schematically illustrates in block diagram form a quantization scheme for applying a non-linear quantization curve;

Fig. 9     illustrates an example of a piecewise linear non-linear quantization curve;

Fig. 10    illustrates an example of a non-linear root quantization curve;

Fig. 11    illustrates an example of a non-linear logarithmic quantization curve;

Fig. 12    schematically illustrates in block diagram form a preferred modification of a hybrid video encoder in accordance with the present invention;

Fig. 13    schematically illustrates in block diagram form an example of a modified hybrid video decoder in accordance with the present invention;

Fig. 14a    illustrates an example of transform coefficient blocks before quantization;

Fig. 14b    illustrates an example of transform coefficient blocks after quantization;

Fig. 14c    illustrates an example of transform coefficient blocks before quantization corresponding to the example of Fig. 14a;

Fig. 14d    illustrates an example of transform coefficient blocks after quantization in accordance with the present invention;

Fig. 15    is a flow chart illustrating the process of encoding video data in accordance with a preferred embodiment of the present invention; and

Fig. 16    is a flow chart illustrating the process of decoding encoded video data in accordance with a preferred embodiment of the present invention.

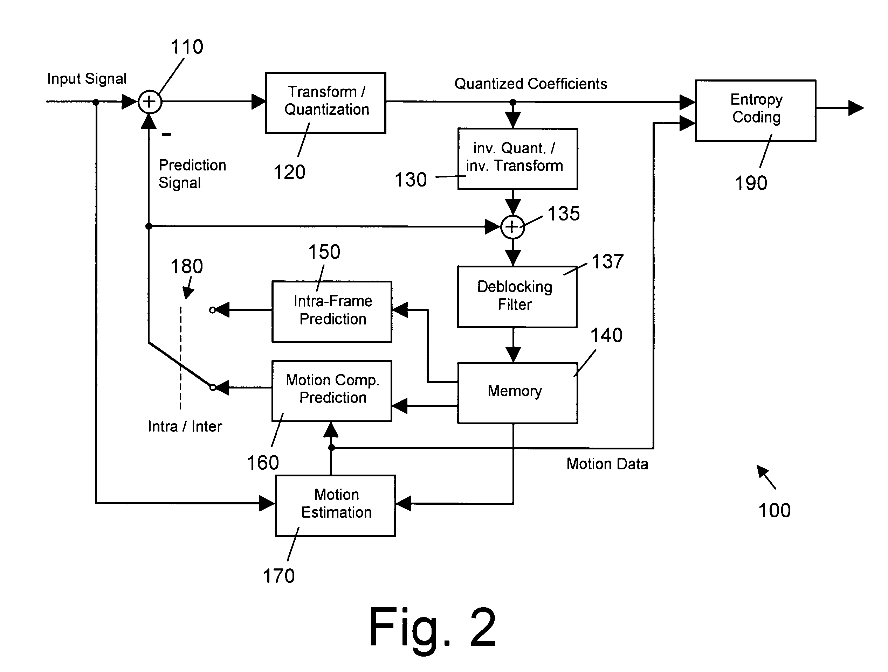

Referring to Fig. 2, an example of a hybrid video encoder is illustrated. The video encoder, generally denoted by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 2 is as follows. The encoder employs a Differential Pulse Code Modulation (DPCM) approach which only transmits differences between the subsequent images of an input video sequence. These differences are determined in subtractor 110 which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the prediction signal.

The motion compensated DPCM, conducted by the video encoder of Fig. 2, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, an displacement vector for each block of a current frame is estimated.

This is accomplished by a motion estimator unit 170, receiving the current input signal and the locally decoded images.

Based on the results of motion estimation, motion compensation performed by motion compensation prediction unit 160 provides a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed therefore.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264 / AVC additionally employs a prediction scheme based on already encoded macro blocks of the same image in order to predict subsequent macro blocks.

Only Intra-encoded images (I-type images) can be encoded without reference to any previously decoded image. The I-type images provide error resilience for the encoded video sequence. Further, entry points into bit streams of encoded data are provided by the I-type images in order to enable random access, i.e. to access I-type images within the sequence of encoded video images. A switch between Intra-mode, i.e. a processing by Intra-frame prediction unit 150, and Inter-mode, i.e. a processing by motion compensation prediction unit 160, is controlled by Intra/Inter switch 180.

Further, a de-blocking filter 137 may be provided in order to reduce the presence of blocking effects in the locally decoded image.

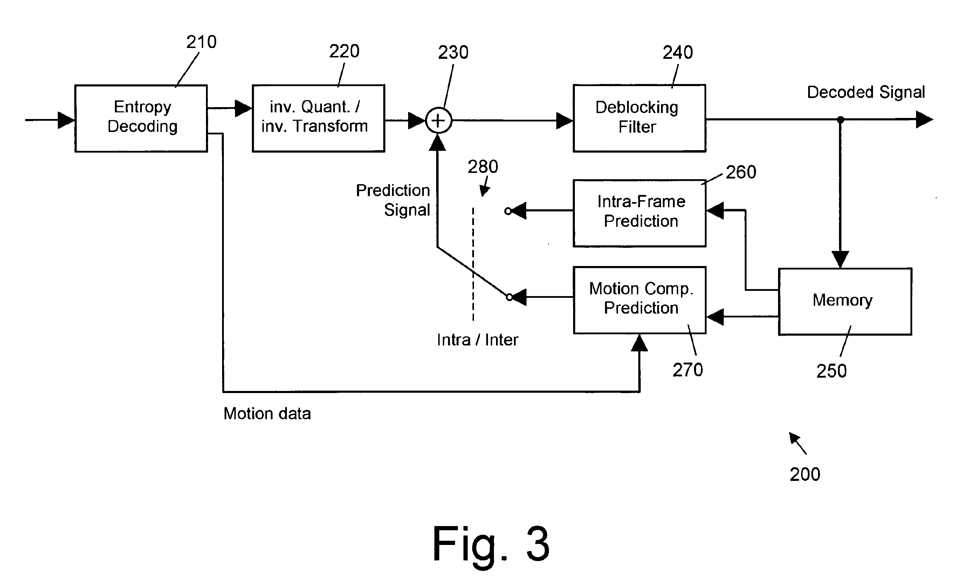

For reconstructing the encoded images at the decoder side, the encoding process is applied in reverse manner. A schematic block diagram, illustrating the configuration of the corresponding decoder generally denoted by reference numeral 200, is shown in Fig. 3. First, the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from a Intra-frame prediction unit 260 in Intra-mode. The resulting image may be applied to a de-blocking filter 240 and the decoded signal is stored in memory 250 to be applied to prediction units 260, 270.

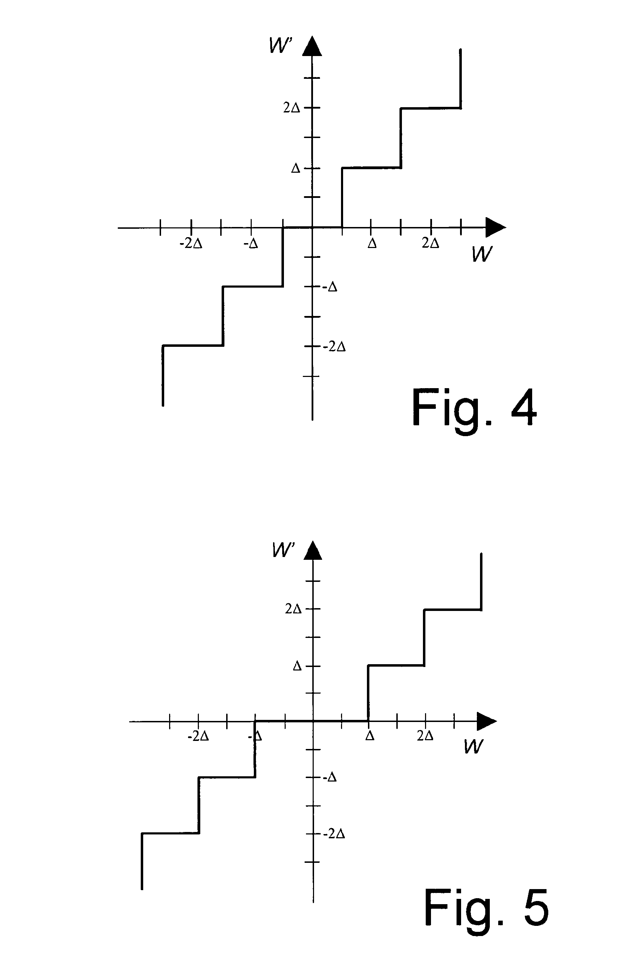

Referring to Fig. 4, an example of a relation between an input coefficient value W and a quantized output coefficient value W' for a uniform quantizer is shown. While the input coefficient value W represents that coefficient value submitted to the quantization unit 120 as shown in Fig. 2, W' represents the de-quantized coefficient value output from inverse quantization unit 130, 220 of Fig. 2 and Fig. 3. According to the example shown in Fig. 4, all input coefficient values in the range of $-\Delta/2 < W \leq \Delta/2$ are quantized to an output coefficient value of W' = 0. In the same manner, the input coefficient values between $\Delta/2 < W \leq 3\Delta/2$ are quantized to W' = $\Delta$. This uniform quantization, i.e. a quantization applying uniform quantization intervals, can be expressed by the following equation (1):

$$Z = \text{floor}\left(\frac{|W| + f}{\Delta}\right) \bullet \text{sgn}(W) \qquad (1)$$

In accordance with equation (1), an input coefficient value W is mapped to a quantization level Z. $\Delta$ represents the quantization step-size or interval size and f represents a rounding control parameter. The rounding control parameter f enables an adjustment of the interval position to a probability distribution by shifting the transition position between adjacent steps. This will be described in more detail below with reference to Fig. 5.

The rounding control parameter f is set for the quantization curve of Fig. 4 to f = Δ/2. The function "floor(...)" of equation (1) rounds to the nearest integer towards zero, while the function "sgn (...)" returns the sign of the input coefficient value W.

The mapping of the quantization level Z to a quantized coefficient value W' is expressed by equation (2):

$$W' = \Delta \cdot Z \tag{2}$$

The operation of equation (2) is called "inverse quantization" or "de-quantization".

Another example of a quantization curve is shown in Fig. 5. By modifying the rounding control parameter f, the rounding behaviour of the quantization operation can be controlled. By employing a rounding control parameter of f = Δ /2 for the example shown in Fig. 4, the quantized coefficient values W' are respectively located within the centre of a quantization interval of the input coefficient values W. For instance, all input coefficient values between Δ/2 < W ≤ 3Δ/2 are quantized to the output coefficient value of W' = Δ.

When employing smaller values for the rounding control parameter f, the quantized coefficient values W' tend to be smaller than the centre value of the interval of input coefficient values W. An the example for a control rounding parameter of f = 0 is shown in Fig. 5. As can be seen therefrom, each quantization interval of input coefficient values W is mapped to the lowest interval value as output coefficient value W'.

The introduction of the rounding control parameter f = 0 has the following two effects:

1. The quantization interval around the coefficient value of 0 is increased. Thus, all values of input coefficient values W between -Δ < W < Δ are quantized to the output coefficient value of W' = 0.

2. The values of the quantized coefficient values W' ≠ 0 are not located in the centre of the quantization interval. For instance, the range of input coefficient values Δ < W ≤ 2 Δ is quantized to W' = Δ.

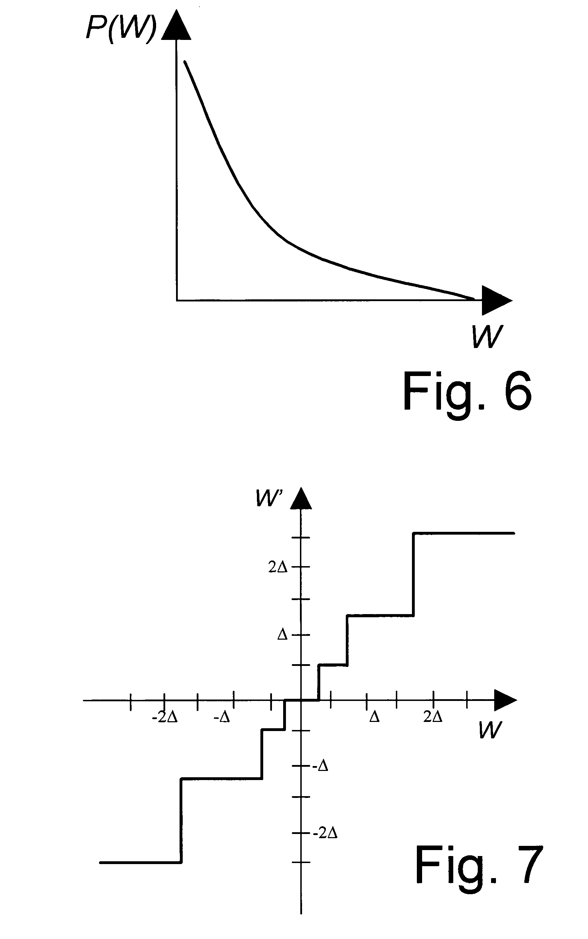

The video coding standards as H.264 / AVC employ a rounding control parameter f having a value of f = Δ/3 in Intra mode and f = Δ/6 in Inter mode. These shifts of the quantization range compared to the quantization intervals shown in Fig. 4 aims to better fit to a non-uniform probability distribution of the input coefficient values. The non-uniform probability distribution of transform coefficients in video coding can be approximated by a Laplacian probability distribution. An example of a Laplacian probability distribution is shown in Fig. 6. Due to the probability distribution of transform coefficients, there tend to be more smaller quantization values within each quantization interval. For this reason, rounding control parameters of f < Δ/2 are employed resulting in smaller values of the quantized coefficient values W'. The quantized coefficient values are thus not located in the centre of a quantization interval.

As the parameters of a Laplacian distribution vary for the Intra and Inter encoding modes, different rounding control parameters are used for each coding mode.

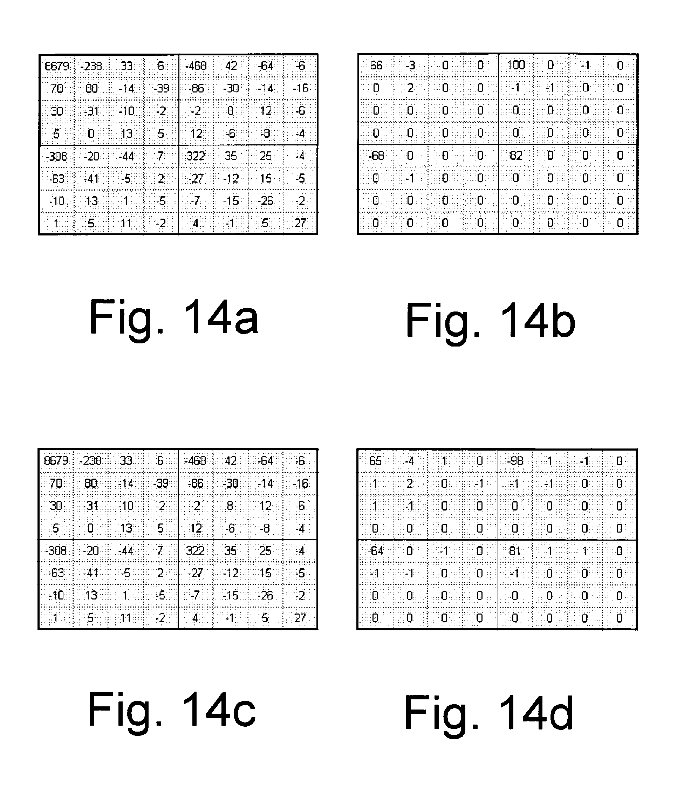

Regarding the encoding of film grain present in motion pictures, film grain is a temporary uncorrelated structure which is not predictable by motion compensation. Consequently, the film grain needs to be encoded in the prediction error, i.e. individually for each image block. An example of coefficient blocks representing a prediction error is illustrated in Fig. 14a.

The film grain information is especially represented by the small prediction error values which, in turn, are reflected by small transform coefficient values. As the quantization stage during video encoding is designed that all coefficient values around zero are quantized to zero, the film grain information is irreversibly lost. As long as smaller display sizes are employed which are not able to reproduce the film grain information, this quantization loss is acceptable and intended in order to increase the coding efficiency. An example of quantized blocks of transform coefficients is shown in Fig. 14b. As can be seen therefrom, the quantization interval for the lowest coefficient values effects that all small coefficient values are quantized to zero.

The film grain information can be preserved within the encoded video data by reducing the size of the quantization intervals such that more quantization intervals are provided. However, such a modification results in significant bit rate increase of the encoding result and a correspondingly reduced encoding efficiency.

According to another approach, the rounding control parameter f may be modified as shown, for instance in Fig. 4 and Fig. 5. However, a modification of the rounding control parameter only modifies the size of the quantization interval for the lowest coefficient values, while the thresholds for quantizing coefficient values W to different adjacent quantization levels is shifted uniformly for all threshold values. This shift of each quantization interval reduces the fit of the quantization to the Laplacian distribution. Consequently, the quantization error is increased and the encoding efficiency is reduced.

In order to overcome these drawbacks, the present invention proposes to parameterize the layout of the quantization intervals. By employing a quantization curve or characteristic curve in accordance with the present invention, the quantization intervals for smaller coefficient values may be set smaller while larger coefficient values may be quantized employing larger quantization intervals.

This approach enables to modify the size of the quantization interval for coefficients close to zero without effecting the size of other quantization intervals. The modification of the size of small quantization intervals may directly depend on the intensity of the film grain remaining in the video data. Thus, the film grain information reconstructed at the decoder side can be improved without increasing the required bit rate of the encoded video data.

An example of quantization intervals which are formed in accordance with the quantization curve of the present invention is illustrated in Fig. 7. As can be seen therefrom, each quantization interval has a different size.

According to the present invention, the quantization interval size for each transform coefficient value can be adapted in accordance with the video content, i.e. film grain information present in the video data to be encoded and the available bit rate. Thus, the present invention enables a more flexible quantization process able to achieve better encoding results without increasing the coding bit rate.

According to a preferred embodiment, the quantization curve is defined by parameters which are transmitted to the decoder side. Accordingly, the quantization curve and the quantization intervals may be updated during the encoding and decoding process. In accordance with predetermined time intervals or events, an updated set of quantization curve parameters is applied to the quantizer and further transmitted to the decoded side. In this manner, the encoding process can be formed adaptively to the image content, in particular to the presence and/or degree of film grain information.

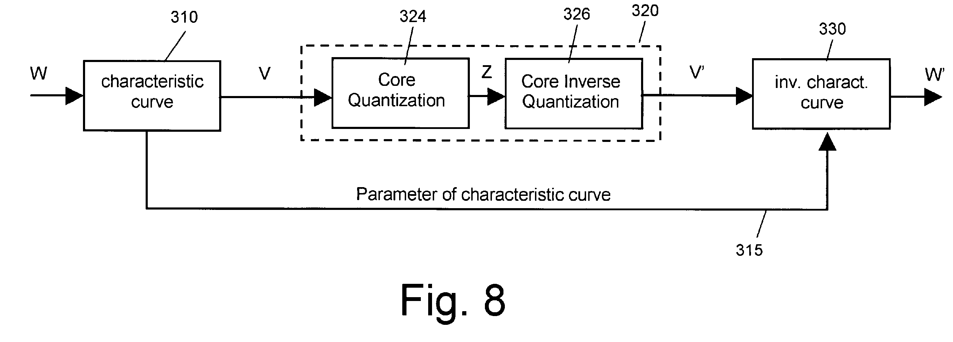

While according to the first embodiment, the quantization curve or characteristic curve serves to adjust the quantization intervals, a second embodiment maintains existing quantization intervals, but applies a respective correction to the coefficient values before applying a quantization at the encoder side and after applying an inverse quantization at the decoder side. A respective block diagram illustrating the configuration of a non-linear quantization in accordance with the present invention is shown in Fig. 8.

According to the non-linear quantization approach show in Fig. 8, the input transform coefficients W are not directly quantized before performing a "core quantization process". While the core quantization process maps the input coefficient values to quantization levels in accordance with predefined fixed quantization intervals, the adjustment of the quantization intervals is effected by weighting the input coefficient values at a pre-processing stage. Correspondingly, the coefficient values output from the inverse quantizer at the decoder side are weighted in inverse manner by a post-processing stage. The weighting process is described by equation (3):

$$V = s(W) \tag{3}$$

wherein V represents the weighted coefficient values and "s(..)" describes the mapping of input coefficient values W to weighted input coefficient values V.

When combining equations (1) and (3), the quantization applied in accordance with the second embodiment of the present invention can be expressed by the following equation (4):

$$Z = \text{floor}\left(\frac{|V|+f}{\Delta}\right) \cdot \text{sgn}(V) = \text{floor}\left(\frac{|s(W)|+f}{\Delta}\right) \cdot \text{sgn}(s(W)) \tag{4}$$

The reconstruction of the coefficient values at the decoder side is defined by the following equations, wherein equation (5) defines the inverse core-quantization, equation (6) defines the inverse application of the characteristic curve, and equation (7) defines the reconstruction of the transform coefficients at the decoder side:

$$V' = \Delta \cdot Z \tag{5}$$

$$W' = s^{-1}(V') = g(V') \tag{6}$$

$$W' = g(\Delta \cdot Z) \tag{7}$$

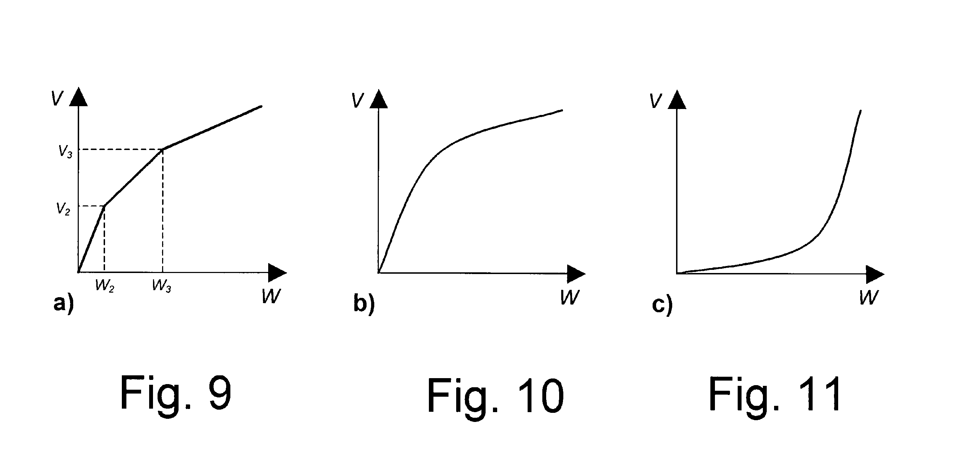

The implementation of the second embodiment in accordance with Fig. 8 is operated as follows. An input coefficient value W is weighted by a predefined characteristic curve. The parameters defining the characteristic curve may either be fixed or, as shown in Fig. 8, adaptable and provided together with the encoded video data to the inverse quantization unit 330 at the decoder side. Examples of the characteristic curve will be explained in connection with Figures 9 to 11. The input coefficient values W are mapped to weighted input coefficient values V in accordance with the characteristic curve. The operation applied by unit 310 is defined in equation (3).

The weighted coefficient values V are submitted to the quantization unit 320. Quantization unit 320 includes a core quantization unit 324 and a core inverse quantization unit 326. The core quantization applied by unit 324 is defined by equation (4). The weighed input coefficient values V are mapped in accordance with a fixed quantization interval scheme to quantization levels Z.

The core inverse quantization unit 326 applies the inverse approach, namely to map the quantization level Z to a quantized weighed quantized value V'. The operation is defined in equation (5). Unit 330 inversely weights the quantized weighted coefficient values V' in order to reconstruct the quantized coefficient values W' in accordance with the applicable characteristic curve notified by parameters 315 from unit 310 at the encoded side.

It is a particular advantage of the second embodiment that the existing core quantization and inverse quantization processes remain unmodified. Only a supplementary pre-processing stage to the core quantization is provided together with a respective supplementary post-processing to the inverse quantization process.

Examples of quantization curves to be applied in the first and second embodiments are illustrated in connection with Figures 9 to 11. It is to be noted that the present invention is not limited to the application of the illustrated curves. A skilled person may employ any other curve appropriate in this respect.

Fig. 9 illustrates a piecewise linear curve. The corresponding mapping process performed in accordance with the second embodiment may be defined by equation (8):

$$V(W) = \begin{cases} \alpha_1 \cdot W & \text{for} \quad W \le W_2 \\ \alpha_2 \cdot (W - W_2) + V_2 & \text{for} \quad W_2 < W \le W_3 \\ \alpha_3 \cdot (W - W_3) + V_3 & \text{for} \quad W_3 < W \end{cases} \tag{8}$$

wherein $\alpha_{1,2,3}$ denote the slope of each piecewise linear portion.

Another example of a quantization curve is shown in Fig. 10. The shown quantization curve is a root curve as defined by equation (9) for the application in the second embodiment:

$$V(W) = \sqrt{\alpha \cdot |W|} \cdot \text{sgn}(W) \tag{9}$$

wherein $\alpha$ presents a scaling parameter and "sgn(W)" returns the sign of input coefficient value W.

The respective inverse operation is applied at the decoder side, in particular by post-processing stage 330.

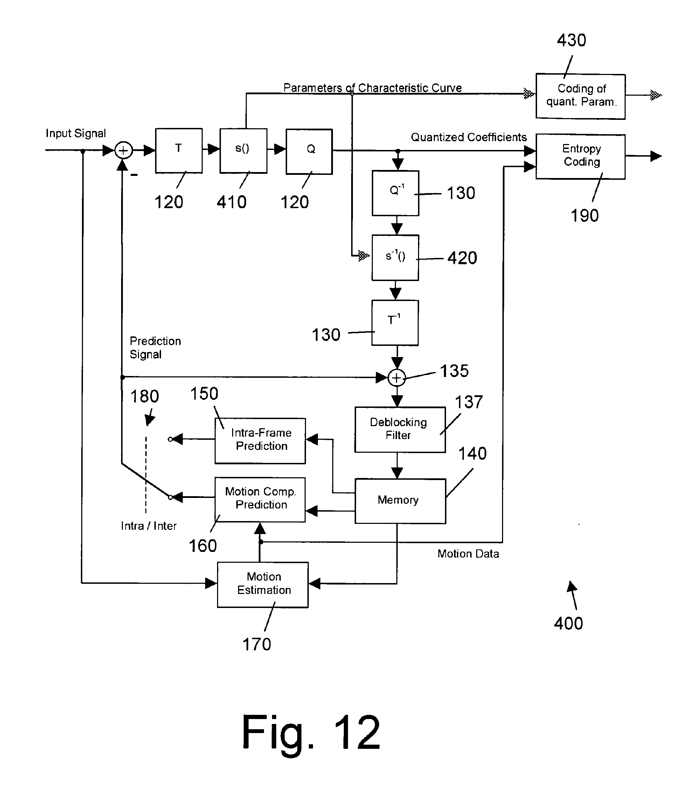

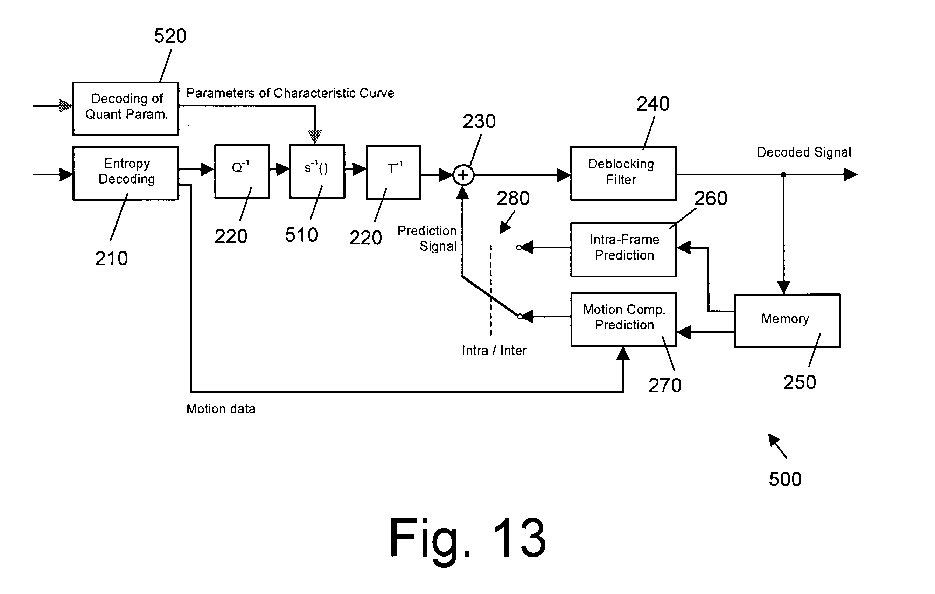

A schematic block diagram illustrating the configuration of an encoder and decoder in accordance with the second embodiment of the present invention is shown in Fig. 12 and Fig. 13. The block diagrams of Fig. 12 and Fig. 13 denote block elements identical to those of Fig. 2 and Fig. 3 by identical reference numerals.

In addition to those block elements already shown in Fig. 2, the encoder illustrated in Fig. 12 generally denoted by reference numeral 400 further comprises a processing stage 410 for pre-processing the transform coefficients output by transform unit 120 and to forward weighted transform coefficients V to quantization unit 120.

A respective post-processing unit 420 is inserted into the decoding stage for providing the locally decoded image. The post-processing stage 420 reverses the weighting applied to the coefficient values in pre-processing stage 410.

In order to enable an adaptive application of a quantization curve, the parameters 315 of the curve are included into the encoded video data. Preferably, the parameters of the quantization curve are compressed by a coding unit 430 in order to insert encoded curve parameters into the encoded video data.

Fig. 13 illustrates the configuration of a decoding device corresponding to the encoder of Fig. 12. The decoder is generally denoted with reference numeral 500. In addition to the block elements of Fig. 3, a post-processing unit 510 is inserted. Post-processing unit 510 applies an operation which is inverse to the operation applied by pre-processing unit 410 of the encoding device of Fig. 12. The quantization curve parameters may be received in encoded form. For this purpose, the parameters are decoded by decoding unit 520.

While Fig. 14c illustrates four blocks of transform coefficient values corresponding to the blocks shown in Fig.

14a, Fig. 14d illustrates four blocks of quantized transform coefficients when applying a predefined quantization curve in accordance with the present invention.

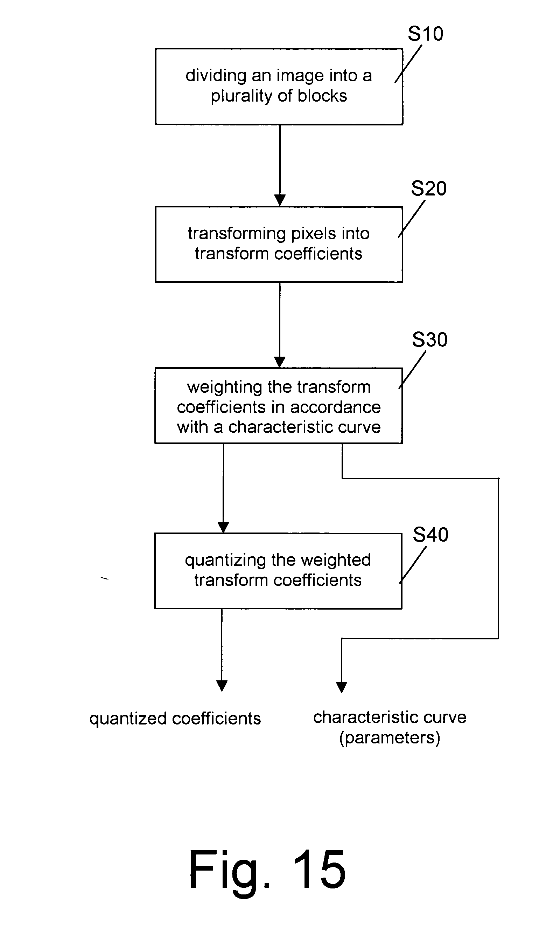

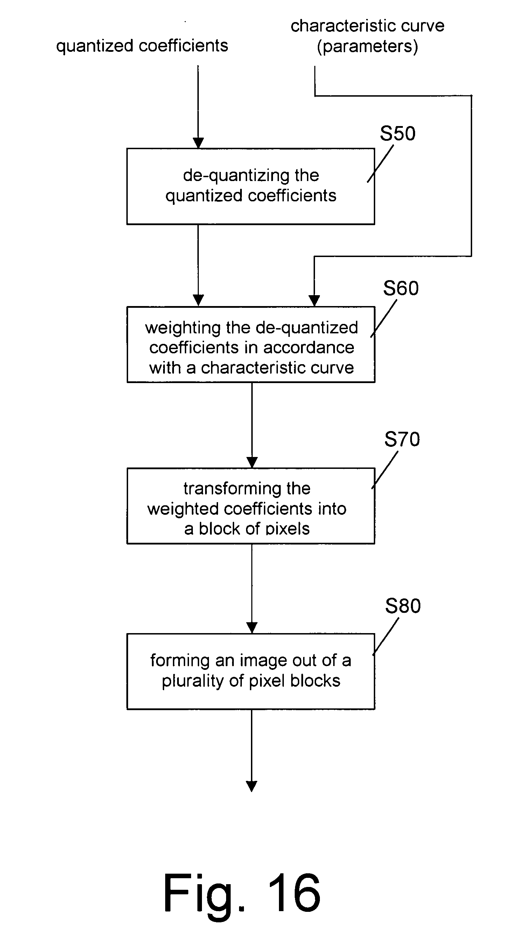

The operation of the encoder and decoder of Fig. 12 and Fig. 13 is described next in connection with Fig. 15 and Fig. 16.

Fig. 15 is flow chart illustrating the operation of an encoder in accordance with the present invention. After dividing a video image to be encoded into a plurality of blocks (step S10), the pixels of a block are transformed into a block of transform coefficients (step S20). Preferably, an orthogonal transform like a DCT is applied. The resulting transform coefficients W are weighed in accordance with the predefined quantization curve (step S30). This pre-processing step corresponds to the implementation of the second embodiment of the present invention. The quantization curve may be a fixed curve or an updatable curve. When employing a curve which can be updated, the parameters for defining the applicable curve are included into the encoded video data in order to enable a decoder to apply the inverse operation.

The weighted transform coefficients V are subject to quantization (step S40). Step S40 represents the core quantization operation performed by core quantization unit 324 of Fig. 8.

The encoded video data include quantized quantization coefficients and parameters defining a quantization curve. These data may be stored in a memory device or transmitted to a decoder for immediate reconstruction of the compressed image.

The decoding process is next described in connection with Fig. 16. The received coefficients are first subjected to de-quantization in accordance with fixed quantization intervals (step S50). The de-quantization operation is performed by the inverse quantization unit 326 of Fig. 8. The de-quantized coefficients are subjected to an inverse weighting operation (step S60). The inverse weighting operation corresponds to the weighting performed in step S30 during the encoding process. When employing an adjustable quantization curve, the curve parameters are obtained from the encoded video data.

The weighted de-quantized coefficient values W' are transformed into a block of pixels (step S70) and subsequent blocks are combined to form decoded video image (step S80).

The latest video coding standard H.264 / AVC applies a quantization of the transform coefficients in accord-ance with equation (11):

$$Z_{ij} = \left( \left( \left| W_{ij} \right| \cdot MF + f \right) >> qbits \right) \cdot \mathrm{sgn}\left( W_{ij} \right) \tag{11}$$

wherein the term "$W_{ij} \cdot MF$" represents the transform coefficients that have to be quantized. "MF" defines a scaling factor to be applied during the quantization operation instead of applying a scaling factor during the transform operation. The indices "ij" denote the position of the individual transform coefficient within the transform matrix. Rounding control parameter f is employed to fit the quantization operation to the probability distribution of the transform coefficients. As the probability distribution of the coefficients differs between Intra encoding mode and Inter encoding mode, different values of f are used for Intra and Inter mode.

The » operation denotes a right shift. Such a right shift operation avoids a division operation and enables a more simple hardware implementation. The right shift operation is equivalent to a division by $2^{qbits}$. The abbreviation "qbits" is given by equation (12):

$$qbits = 15 + floor\left( \frac{QP}{6} \right) \tag{12}$$

wherein "qbits" denotes the quantization parameter.

The function "sgn(..)" of equation (11) returns the sign of the input coefficient value.

With

$$\Delta = 2^{qbits}$$

Equation (11) can be modified to equation (13)

$$Z_{ij} = \text{floor}\left(\frac{\left|W_{ij}\right| \cdot MF + f}{\Delta}\right) \cdot \text{sgn}\left(W_{ij}\right) \qquad (13)$$

By introducing a quantization curve, equation (13) is furthermore modified to equation (14):

$$Z_{ij} = \text{floor}\left(\frac{\left|s(W_{ij} \cdot MF)\right| + f}{\Delta}\right) \cdot \text{sgn}\left(s(W_{ij} \cdot MF)\right) \qquad (14)$$

and further to equation (15):

$$Z_{ij} = \left(\left(s(W_{ij} \cdot MF) + f\right) >> qbits\right) \cdot \text{sgn}\left(s(W_{ij} \cdot MF)\right) \qquad (15)$$

The inverse quantization in the video coding standard H.264 / AVC is performed employing equation (16):

$$W_{ij}' = Z_{ij} \cdot V_{ij} \cdot 2^{floor\left(\frac{QP}{6}\right)} \qquad (16)$$

The final term of equation (16):

$$V_{ij} \cdot 2^{floor\left(\frac{QP}{6}\right)}$$

includes a quantization step-size $\Delta$ and a scaling factor. The scaling factor originates from the inverse transform and is not part of the core quantization scheme. In order to introduce a non-linear curve to the inverse transform of equation (16), the scaling factor has to be separated from the quantization step-size $\Delta$. When taking equation (12) into account, the separation can be calculated by

$$V_{ij} \cdot 2^{floor\left(\frac{QP}{6}\right)} = V_{ij} \cdot 2^{qbits} \cdot 2^{-15} = \Delta \cdot V_{ij} \cdot 2^{-15} \qquad (17)$$

Using equation (17), equation (16) can be expressed as

$$W_{ij}' = (Z_{ij} \cdot \Delta) \cdot V_{ij} \cdot 2^{-15} \qquad (18)$$

The term

$$V_{ij} \cdot 2^{-15}$$

from equation (18) denotes a scaling factor originating from the inverse transform. In accordance with equation (6), the quantization curve can be integrated into the inverse transform and equation (18) can be modified to equation (19):

$$W_{ij}^{'} = g\!\left(Z_{ij} \cdot \Delta\right)\!\cdot V_{ij} \cdot 2^{-15} \tag{19}$$

by employing a shift operation replacing the multiplication by $2^{-15}$, equation (19) can be rewritten in the form of equation (20):

$$W_{ij}^{'} = g\!\left(Z_{ij} \cdot \Delta\right)\!\cdot V_{ij} >> 15 \tag{20}$$

Summarising, the present invention enables to adaptively shape the quantization intervals for encoding video data in order to better adapt the quantization process to film grain information without increasing the resulting bit rate while maintaining the coding efficiency. By selecting a shape which reduces the size of the quantization interval for the lowest coefficient values, the film grain information within the encoded video data can be preserved. In contrast, a curve characteristic enlarging the interval of the lowest coefficient values reduces the film grain information in the encoded video data.

## Claims

1. A method for encoding video data, comprising the steps of:

    dividing (S10) an image into blocks, each block including a plurality of pixels,

    transforming (S20) the pixels of a block into transform coefficients, and

    quantizing the coefficients in accordance with predefined quantization intervals by mapping each coefficient value to a quantized coefficient value

    **characterized in that**
    the quantization intervals are set in accordance with a predefined quantization curve, said quantization curve being a non-linear curve having smaller quantization intervals for lower coefficient values.

2. A method according to claim 1, wherein the step size of the quantization intervals of said predefined quantization curve increases for larger coefficient values.

3. A method according to claim 1, wherein said quantization intervals increase in accordance with a piecewise linear curve, a root curve or a logarithmic curve for increasing coefficient values.

4. A method according to any of claims 1 to 3, wherein said predefined quantization curve being defined by parameters (315), and said quantized coefficient values together with said predefined parameters (315) represent the encoded video data.

5. A method according to any of claims 1 to 4, wherein said quantizing step comprises the steps of:

    weighting (S30) said coefficient values in accordance with said predefined quantization curve, and

quantizing (S40) said weighted coefficient values by applying fixed quantization intervals.

6. A method according to claim 5, wherein said fixed quantization intervals being quantization intervals of a regular interval size.

7. A method according to claim 5 or 6, wherein said quantization curve being a piecewise linear curve, a root curve or a logarithmic curve.

8. A method according to any of claims 1 to 7, wherein said method further comprises the steps of:

detecting a degree or the presence of film grain within the video data to be encoded, and
adjusting the parameters (315) of said predefined quantization curve in accordance with the detection result.

9. A method according to any of claims 1 to 7, wherein said method further comprises the steps of:

detecting the presence of film grain within the video data to be encoded, and

enabling the application of said quantization curve only if film grain has been detected.

10. A method according to any of claims 1 to 9, wherein said method further comprises the step of predicting the block to be encoded based on a previously encoded block wherein said prediction step comprises a decoding step including a de-quantization step which applies said predefined quantization curve in inverse manner to said encoded coefficients.

11. An encoder for encoding video data based on image blocks, each block including a plurality of pixels, comprising:

a transform unit (120) for transforming the pixels of a block into transform coefficients, and

a quantizer (120) for quantizing the transform coefficients in accordance with predefined quantization intervals by mapping each coefficient value to a quantized coefficient value

**characterized in that**
the quantization intervals are set in accordance with a predefined quantization curve, said quantization curve being a non-linear curve having smaller quantization intervals for lower coefficient values.

12. An encoder according to claim 11, wherein the quantization intervals of said predefined quantization curve having a step size which increases for larger coefficient values.

13. An encoder according to claim 11, wherein said quantization intervals increase in accordance with a piecewise linear curve, a root curve or a logarithmic curve for increasing coefficient values.

14. An encoder according to any of claims 11 to 13, wherein said predefined quantization curve being defined by parameters (315), and said quantized coefficient values together with said predefined parameters (315) represent the encoded video data.

15. An encoder according to any of claims 11 to 14, wherein said quantizer comprises:

weighting means (410) for weighting said coefficient values (W) in accordance with said predefined characteristic curve, and
core quantization means (120) for quantizing said weighted coefficient values (V) by applying fixed quantization intervals.

16. An encoder according to claim 15, wherein said fixed quantization intervals being quantization intervals of a regular interval size.

17. An encoder according to claim 15 or 16, wherein said characteristic curve being a piecewise linear curve, a root curve or a logarithmic curve.

**18.** An encoder according to any of claims 11 to 17, further comprising:

a detector for detecting a degree or the presence of film grain within the video data to be encoded, and

setting means for adjusting the parameters (315) of said predefined quantization curve in accordance with the detection result.

**19.** An encoder according to any of claims 11 to 17, further comprising:

a detector for detecting the presence of film grain within the video data to be encoded, and

enabling means for enabling the application of said quantization curve only if film grain has been detected.

**20.** An encoder according to any of claims 11 to 19, wherein said encoder being a predictive encoder and further comprises a decoder for decoding the encoded video data, said decoder including a de-quantizer applying said predefined quantization curve in inverse manner.

**21.** A method for decoding encoded video data on a block basis, said encoded video data include quantized coefficients, comprising the steps of:

de-quantizing (S50) a block of quantized coefficients of said encoded video data by mapping each quantized coefficient value to a de-quantized coefficient value in accordance with predefined quantization intervals, and

transforming (S70) a block of de-quantized coefficients into a block of pixels

**characterized in that**
the quantization intervals are set in accordance with a predefined quantization curve, said quantization curve being a non-linear curve having smaller quantization intervals for lower coefficient values.

**22.** A method according to claim 21, wherein the quantization intervals of said predefined quantization curve having a step size which increases for larger coefficient values.

**23.** A method according to claim 21, wherein said quantization intervals increase in accordance with a piecewise linear curve, a root curve or a logarithmic curve for increasing coefficient values.

**24.** A method according to any of claims 21 to 23, wherein said predefined quantization curve being defined by parameters (315), and said quantized coefficient values together with said predefined parameters (315) represent said encoded video data.

**25.** A method according to claim 24, wherein said parameters (315) define the quantization curve applied to said quantized coefficient values during encoding.

**26.** A method according to any of claims 21 to 25, wherein said de-quantizing step comprises the steps of:

de-quantizing (S50) said quantized coefficients (Z) by applying an inverse quantization having fixed quantization intervals, and

weighting (S60) said de-quantized coefficient values (V') in accordance with said predefined quantization curve.

**27.** A method according to claim 26, wherein said fixed quantization intervals being quantization intervals of a regular interval size.

**28.** A method according to claim 26 or 27, wherein said quantization curve being a piecewise linear curve, a root curve or a logarithmic curve.

**29.** A decoder for decoding encoded video data on a block basis, said encoded video data include quantized coefficients, comprising:

an inverse quantizer (220) for de-quantizing a block of quantized coefficients of said encoded video data by mapping each quantized coefficient value to a de-quantized coefficient value in accordance with predefined quantization intervals, and

an inverse transformer (220) for transforming a block of de-quantized coefficients into a block of pixels

**characterized in that**
the quantization intervals are set in accordance with a predefined quantization curve, said quantization curve being a non-linear curve having smaller quantization intervals for lower coefficient values.

30. A decoder according to claim 29, wherein the quantization intervals of said predefined quantization curve having a step size which increases for larger coefficient values.

31. A decoder according to claim 29, wherein said quantization intervals increase in accordance with a piecewise linear curve, a root curve or a logarithmic curve for increasing coefficient values.

32. A decoder according to any of claims 29 to 31, wherein said predefined quantization curve being defined by parameters (315), and said quantized coefficient values together with said predefined parameters (315) represent the encoded video data.

33. A decoder according to claim 32, wherein said parameters (315) define the quantization curve applied to said quantized coefficient values during encoding.

34. A decoder according to any of claims 29 to 33, wherein said inverse quantizer comprises:

core de-quantizing means (326) for de-quantizing said quantized coefficients (Z) by applying an inverse quantization having fixed quantization intervals, and

weighting means (330) for weighting said de-quantized coefficient values (V') in accordance with said predefined quantization curve.

35. A decoder according to claim 34, wherein said fixed quantization intervals being quantization intervals of a regular interval size.

36. A decoder according to claim 34 or 35, wherein said quantization curve being a piecewise linear curve, a root curve or a logarithmic curve.

**Amended claims in accordance with Rule 86(2) EPC.**

1. A method for encoding video data, comprising the steps of:

dividing (S10) an image into blocks, each block including a plurality of pixels,

transforming (S20) the pixels of a block into transform coefficients,

setting quantization intervals in accordance with a predefined quantization curve, and said predefined quantization curve being a non-linear curve having smaller quantization intervals for lower coefficient values, and

quantizing the coefficients in accordance with said quantization intervals by mapping each coefficient value to a quantized coefficient value

**characterized by** further comprising the steps of

detecting the presence of film grain within the video data to be encoded, and

enabling the application of said quantization curve only if film grain has been detected.

**2.** A method according to claim 1, wherein said predefined quantization curve being defined by parameters (315).

**3.** A method according to claim 2, wherein said method further comprises the steps of:

detecting a degree of film grain within the video data to be encoded, and

adjusting the parameters (315) of said predefined quantization curve in accordance with the detection result, so that smaller quantization intervals are applied in the range of transform coefficients corresponding to film grain.

**4.** A method according to claim 2 or 3, wherein said quantized coefficient values together with said predefined parameters (315) represent the encoded video data.

**5.** A method according to any of claims 1 to 4, wherein the step size of the quantization intervals of said predefined quantization curve increases for larger coefficient values.

**6.** A method according to any of claims 1 to 4, wherein said quantization intervals increase in accordance with a piecewise linear curve, a root curve or a logarithmic curve for increasing coefficient values.

**7.** A method according to any of claims 1 to 6, wherein said quantizing step comprises the steps of:

weighting (S30) said coefficient values in accordance with said predefined quantization curve, and

quantizing (S40) said weighted coefficient values by applying fixed quantization intervals.

**8.** A method according to claim 7, wherein said fixed quantization intervals being quantization intervals of an equal interval size.

**9.** A method according to claim 7 or 8, wherein said quantization curve being a piecewise linear curve, a root curve or a logarithmic curve.

**10.** A method according to any of claims 1 to 9, wherein said method further comprises the step of predicting the block to be encoded based on a previously encoded block wherein said prediction step comprises a decoding step including a de-quantization step which applies said predefined quantization curve in inverse manner to said encoded coefficients.

**11.** An encoder for encoding video data based on image blocks, each block including a plurality of pixels, comprising:

a transform unit (120) for transforming the pixels of a block into transform coefficients,

a quantizer (120) for quantizing the transform coefficients in accordance with predefined quantization intervals by mapping each coefficient value to a quantized coefficient value, and

a quantization interval setting unit for setting the quantization intervals in accordance with a predefined quantization curve, said quantization curve being a non-linear curve having smaller quantization intervals for lower coefficient values,

**characterized by** further comprising

a detector for detecting the presence of film grain within the video data to be encoded, and

enabling means for enabling the application of said quantization curve only if film grain has been detected.

**12.** An encoder according to any of claim 11, wherein said predefined quantization curve being defined by parameters (315).

**13.** An encoder according to claim 12, further comprising:

a detector for detecting a degree of film grain within the video data to be encoded, and

setting means for adjusting the parameters (315) of said predefined quantization curve in accordance with the detection result, so that smaller quantization intervals are applied in the range of transform coefficients corresponding to film grain.

**14.** An encoder according to claim 12 or 13, wherein said quantized coefficient values together with said predefined parameters (315) represent the encoded video data.

**15.** An encoder according to any of claims 11 to 14, wherein the quantization intervals of said predefined quantization curve having a step size which increases for larger coefficient values.

**16.** An encoder according to any of claims 11 to 14, wherein said quantization intervals increase in accordance with a piecewise linear curve, a root curve or a logarithmic curve for increasing coefficient values.

**17.** An encoder according to any of claims 11 to 16, wherein said quantizer comprises:

weighting means (410) for weighting said coefficient values (W) in accordance with said predefined characteristic curve, and

core quantization means (120) for quantizing said weighted coefficient values (V) by applying fixed quantization intervals.

**18.** An encoder according to claim 17, wherein said fixed quantization intervals being quantization intervals of an equal interval size.

**19.** An encoder according to claim 18, wherein said characteristic curve being a piecewise linear curve, a root curve or a logarithmic curve.

**20.** An encoder according to any of claims 11 to 19, wherein said encoder being a predictive encoder and further comprises a decoder for decoding the encoded video data, said decoder including a de-quantizer applying said predefined quantization curve in inverse manner.

# Fig. 1

Fig. 2

EP 1 569 458 A1

**Fig. 3**

Entropy Decoding — 210
inv. Quant. / inv. Transform — 220
230 (+)
Deblocking Filter — 240
Decoded Signal
280
Prediction Signal
Intra-Frame Prediction — 260
Intra / Inter
Motion Comp. Prediction — 270
Memory — 250
Motion data
200

Fig. 4

Fig. 5

Fig. 6

Fig. 7

Fig. 8

EP 1 569 458 A1

EP 1 569 458 A1

Fig. 9

Fig. 10

Fig. 11

Fig. 12

**520** Decoding of Quant Param.

Parameters of Characteristic Curve

**210** Entropy Decoding

**220** Q⁻¹

**510** s⁻¹()

**220** T⁻¹

Prediction Signal

**230**

**240** Deblocking Filter

Decoded Signal

**280**

Intra / Inter

**260** Intra-Frame Prediction

**270** Motion Comp. Prediction

**250** Memory

Motion data

**500**

# Fig. 13

| 8679 | -238 | 33 | 6 | -468 | 42 | -64 | -6 |
|---|---|---|---|---|---|---|---|
| 70 | 80 | -14 | -39 | -86 | -30 | -14 | -16 |
| 30 | -31 | -10 | -2 | -2 | 8 | 12 | -6 |
| 5 | 0 | 13 | 5 | 12 | -6 | -8 | -4 |
| -308 | -20 | -44 | 7 | 322 | 35 | 25 | -4 |
| -63 | -41 | -5 | 2 | -27 | -12 | 15 | -5 |
| -10 | 13 | 1 | -5 | -7 | -15 | -26 | -2 |
| 1 | 5 | 11 | -2 | 4 | -1 | 5 | 27 |

# Fig. 14a

| 66 | -3 | 0 | 0 | 100 | 0 | -1 | 0 |
|---|---|---|---|---|---|---|---|
| 0 | 2 | 0 | 0 | -1 | -1 | 0 | 0 |
| 0 | 0 | 0 | 0 | 0 | 0 | 0 | 0 |
| 0 | 0 | 0 | 0 | 0 | 0 | 0 | 0 |
| -68 | 0 | 0 | 0 | 82 | 0 | 0 | 0 |
| 0 | -1 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

# Fig. 14b

| 8679 | -238 | 33 | 6 | -468 | 42 | -64 | -6 |
|---|---|---|---|---|---|---|---|
| 70 | 80 | -14 | -39 | -86 | -30 | -14 | -16 |
| 30 | -31 | -10 | -2 | -2 | 8 | 12 | -6 |
| 5 | 0 | 13 | 5 | 12 | -6 | -8 | -4 |
| -308 | -20 | -44 | 7 | 322 | 35 | 25 | -4 |
| -63 | -41 | -5 | 2 | -27 | -12 | 15 | -5 |
| -10 | 13 | 1 | -5 | -7 | -15 | -26 | -2 |
| 1 | 5 | 11 | -2 | 4 | -1 | 5 | 27 |

# Fig. 14c

| 65 | -4 | 1 | 0 | -98 | 1 | -1 | 0 |
|---|---|---|---|---|---|---|---|
| 1 | 2 | 0 | -1 | -1 | -1 | 0 | 0 |
| 1 | -1 | 0 | 0 | 0 | 0 | 0 | 0 |
| 0 | 0 | 0 | 0 | 0 | 0 | 0 | 0 |
| -64 | 0 | -1 | 0 | 81 | 1 | 1 | 0 |
| -1 | -1 | 0 | 0 | -1 | 0 | 0 | 0 |
| 0 | 0 | 0 | 0 | 0 | 0 | 0 | 0 |
| 0 | 0 | 0 | 0 | 0 | 0 | 0 | 0 |

# Fig. 14d

**Fig. 15**

quantized coefficients

characteristic curve
(parameters)

S50

de-quantizing the
quantized coefficients

S60

weighting the de-quantized
coefficients in accordance
with a characteristic curve

S70

transforming the
weighted coefficients into
a block of pixels

S80

forming an image out of a
plurality of pixel blocks

# Fig. 16

**European Patent Office**

## EUROPEAN SEARCH REPORT

Application Number

EP 04 00 3184

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GUICHARD J ET AL: "INTRA- AND INTER FRAME TRANSFORM CODING FOR MOVING PICTURES TRANSMISSION" INTEGRATING THE WORLD THROUGH COMMUNICATIONS. TORONTO, JUNE 22 - 25, 1986, INTERNATIONAL CONFERENCE ON COMMUNICATIONS, NEW YORK, IEEE, US, vol. VOL. 1, 22 June 1986 (1986-06-22), pages 381-384, XP000826958 | 1,2,4, 10-12, 14, 20-22, 24,25, 29,30, 32,33 | H04N7/30 H04N7/50 |
| Y | * abstract * | 3,5-7, 13, 15-17, 23, 26-28, 31,34-36 | |
| A | * page 382, left-hand column, line 6 - right-hand column, line 2 * <br> * figures 1,2 * <br> ----- | 8,9,18, 19 | |
| Y | NERI MERHAV: "Embedding Companders in JPEG Compression" HP LABS 1998 TECHNICAL REPORTS, [Online] 1998, XP002285864 Retrieved from the Internet: URL:http://www.hpl.hp.com/techreports/98/HPL-98-141.html> [retrieved on 2004-06-22] | 3,5-7, 13, 15-17, 23, 26-28, 31,34-36 | |
| A | * abstract * | 1,2,4, 8-12,14, 18-22, 24,25, 29,30, 32,33 | |
| | * page 1, line 1 - page 2, line 8 * <br> * page 5, line 5 - page 6, line 21 * <br> * figure 1 * <br> ----- <br> -/-- | | |

**TECHNICAL FIELDS SEARCHED (Int.Cl.7)**

H04N

The present search report has been drawn up for all claims

| Place of search | Date of completion of the search | Examiner |
|---|---|---|
| Berlin | 25 June 2004 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**European Patent Office**

## EUROPEAN SEARCH REPORT

Application Number

EP 04 00 3184

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | GERSHO A: "Principles of Quantization" IEEE TRANSACTIONS ON CIRCUITS AND SYSTEMS, vol. 25, no. 7, 1 July 1978 (1978-07-01), XP002285971 * abstract * * page 427, right-hand column, last paragraph - page 428, right-hand column, line 11 * * page 430, left-hand column, last paragraph - page 432, left-hand column, line 9 * ----- | 1-36 | |
| A | MCLEAN I ET AL: "Telecine noise reduction" 2001, LONDON, UK, IEE, UK, 16 January 2001 (2001-01-16), pages 2/1-6, XP002285972 * page 1, line 1 - page 2, line 38 * * page 4, line 5 - line 10 * ----- | 8,9,18, 19 | |
| A | WO 02/33958 A (EASTMAN KODAK CO) 25 April 2002 (2002-04-25) * abstract * * page 35, line 9 - page 36, line 6 * ----- | 8,9,18, 19 | TECHNICAL FIELDS SEARCHED (Int.Cl.7) |

The present search report has been drawn up for all claims

| Place of search | Date of completion of the search | Examiner |
|---|---|---|
| Berlin | 25 June 2004 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 00 3184

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2004

| Patent document cited in search report | | Publication date | Patent family member(s) | | Publication date |
|---|---|---|---|---|---|
| WO 0233958 | A | 25-04-2002 | EP | 1329094 A2 | 23-07-2003 |
| | | | JP | 2004512595 T | 22-04-2004 |
| | | | WO | 0233958 A2 | 25-04-2002 |

EPO FORM P0459

For more details about this annex : see Official Journal of the European Patent Office, No. 12/82